# EUROPEAN PATENT APPLICATION

(11) **EP 4 807 811 A1**
(43) Date of publication of application: **16.09.2026**
(21) Application number: 24899230.7
(22) Date of filing: 08.07.2024
(51) Int. Cl.: H01M 4/587, H01M 4/583

(54) **SECONDARY BATTERY AND ELECTRIC APPARATUS CONTAINING SAME**

(30) Priority: 07.12.2023 CN 202311677390
(71) Applicant: Contemporary Amperex Technology Co., Limited, Ningde, Fujian 352100 (CN)
(72) Inventor: CHEN, Meiwan, Ningde, Fujian 352100 (CN); MA, Jianjun, Ningde, Fujian 352100 (CN); WU, Chou, Ningde, Fujian 352100 (CN); HE, Libing, Ningde, Fujian 352100 (CN)
(74) Representative: Lorenz Seidler Gossel Part. mbB
(86) International application number: PCT/CN2024/104248
(87) International publication number: WO 2025/118579

(57) **Abstract**

Provided in the present disclosure are a secondary battery and an electric apparatus containing same. The secondary battery comprises a negative electrode sheet, wherein the negative electrode sheet comprises a negative current collector and a negative film layer, which is arranged on at least one surface of the current collector and comprises a negative active material and a conductive agent, the powder conductivity σ of the negative active material is greater than or equal to 80 S/cm but less than or equal to 106 S/cm, and the compaction density of the negative film layer is 1.35 g/cm³ to 1.50 g/cm³. The negative electrode sheet is conductive to alleviating a black-spot phenomenon of a secondary battery and improving the cycle performance and dynamic performance of the secondary battery.

## Description

### CROSS-REFERENCE TO RELATED APPLICATIONS

The present disclosure claims the priority to Chinese Patent Application No. 202311677390.1 filed on December 07, 2023 and entitled "SECONDARY BATTERY AND ELECTRIC APPARATUS CONTAINING THE SAME", which is incorporated herein by reference in its entirety.

### TECHNICAL FIELD

The present disclosure relates to the technical field of secondary batteries, and particularly to a secondary battery and an electric apparatus including the secondary battery.

### BACKGROUND

In recent years, secondary batteries are more and more widely used in energy storage power supply systems such as hydroelectric power stations, thermal power stations, wind power stations, and solar power stations, as well as a variety of fields such as power tools, electric bicycles, electric motorcycles, electric vehicles, military equipment, and aerospace. Therefore, higher requirements are raised for the performances for use of secondary batteries.

During the use or storage of secondary batteries, due to a series of complex chemical and physical actions inside the batteries, some failures often occur, such as black spots and lithium plating, which seriously reduce the performance for use of secondary batteries. The negative electrode active material is one of the important raw materials for secondary batteries, and has a great influence on the electrical properties of secondary batteries. The failure of a graphite-based negative electrode material mainly occurs on the surface of graphite, which is produced in the process of an electrochemical reaction between the graphite surface and the electrolyte solution to form a solid electrolyte interface (SEI), and ultimately affects the cycle performance of secondary batteries. Therefore, there is a need to provide a secondary battery that can alleviate the black-spot phenomenon of the secondary battery.

### SUMMARY

The present disclosure provides a secondary battery. The secondary battery has good cycle performance and dynamic performance, and alleviated black-spot phenomenon on a surface of a negative electrode of the secondary battery.

The secondary battery provided in the present disclosure includes a negative electrode sheet. The negative electrode sheet includes a negative electrode current collector and a negative electrode film layer arranged on at least one surface of the current collector and containing a negative electrode active material. The powder conductivity σ of the negative electrode active material is greater than or equal to 80 S/cm but less than or equal to 106 S/cm determined under a test condition including a compaction density of 1.5 g/cm³. The compaction density of the negative electrode film layer ranges from 1.35 g/cm³ to 1.50 g/cm³.

The powder conductivity σ of the negative electrode active material and the compaction density of the negative electrode film layer are adjusted. As a result, good electrical contact and conductive network are formed between the negative electrode active material particles in the negative electrode sheet, the problems of delayed gas generation of some active material particles caused by delayed formation of the SEI film in the formation process and black spot defects caused by the failed intercalation of active ions in the active material due to the gas barrier are alleviated, and the problem of lithium plating caused by a higher active ion content in the battery core than the acceptable amount of the negative electrode is alleviated, whereby the cycle performance and dynamic performance of the secondary battery are improved.

In any implementation, the powder conductivity σ is 83 S/cm to 104 S/cm, which further improves the electrical conductivity of the negative electrode active material, alleviate the black-spot phenomenon and enhance the cycle performance of the secondary battery.

In any implementation, the compaction density of the negative electrode film layer is 1.40 to 1.50 g/cm³, which can further improve the energy density of the secondary battery.

In any implementation, the negative electrode active material satisfies at least one of the following conditions:
(1) the volume distribution particle size D_{V}1 of the negative electrode active material is 1.4 µm to 3.0 µm, and optionally 1.7 µm to 2.7 µm;
(2) the volume distribution particle size D_{V}50 of the negative electrode active material is 12 µm to 18 µm, and optionally 12.9 µm to 14.5 µm; and
(3) the particle size distribution (D_{V}90-D_{V}10)/D_{V}50 of the negative electrode active material is 1.3 to 1.8, and optionally 1.35 to 1.70.

By controlling the volume distribution particle size D_{V}1, the excessive active sites on the surface of the negative electrode active material and the irreversible active ion consumption caused by a too high content of small particles are reduced, the conductive network between the negative electrode active material particles is improved, and the secondary battery is promoted to have both good cycle performance and alleviated black-spot phenomenon. By controlling the volume distribution particle size D_{V}50, enough active sites are obtained, the inhibition on the deintercalation rate of active ions is reduced, and the dynamic performance of the secondary battery is improved; By controlling the particle size distribution of the negative electrode active material, the concentration of particle size distribution of the negative electrode active material is enhanced, the side reaction of the negative electrode active material with a too large and a too small particle size can be reduced during the electrochemical reaction, the cycle performance and the dynamic performance of the secondary battery are comprehensively improved, and the black-spot phenomenon is further alleviated.

In any implementation, the tap density of the negative electrode active material is 1.25 g/cm³ to 1.45 g/cm³, and optionally 1.29 g/cm³ to 1.41 g/cm³. The tap density of the negative electrode active material is adjusted, so that the negative electrode active material with various particle sizes can be well dispersed in the negative electrode sheet, enough contact sites and good electrical contact are formed between the negative electrode active material particles, the active ions are well intercalated in and deintercalated from the negative electrode active material, and the plating of active ions and the black-spot phenomenon of the negative electrode sheet are reduced.

In any implementation, the specific surface area of the negative electrode active material is 0.8m²/g to 1.4m²/g, and optionally 0.9m²/g to 1.3m²/g. By adjusting the specific surface area of the negative electrode active material, the contact sites and the surface active sites between the negative electrode active material particles are increased, the conductivity of the negative electrode active material is improved and the transmit of active ions is increased, thereby improving the cycle performance of the secondary battery.

In any implementation, the gravimetric capacity of the negative electrode active material is 335 mAh/g to 350 mAh/g, and optionally 340.5 mAh/g to 347.5 mAh/g. Therefore, the energy density and cycle performance of the secondary battery are improved.

In any implementation, the areal density of the negative electrode film layer in the negative electrode sheet is 7 mg/cm² to 15 mg/cm², to enhance the energy density of the secondary battery and improve the cycle performance of the secondary battery.

In any implementation, the negative electrode active material includes artificial graphite.

A second aspect of the present disclosure provides an electric apparatus, which includes the secondary battery according to the first aspect.

### BRIEF DESCRIPTION OF THE DRAWINGS

FIG. 1 shows a schematic view of a secondary battery according to an implementation of the present disclosure;
FIG. 2 shows an exploded view of the secondary battery according to an implementation of the present disclosure shown in FIG. 1;
FIG. 3 shows a schematic view of a battery module according to an implementation of the present disclosure;
FIG. 4 shows a schematic view of a battery pack according to an implementation of the present disclosure;
FIG. 5 shows an exploded view of the battery pack according to an implementation of the present disclosure shown in FIG. 4;
FIG. 6 shows a schematic view of an electric apparatus powered by a secondary battery according to an implementation of the present disclosure; and
FIG. 7 shows a cycle curve in Example 2 and Comparative Example 1 of the present disclosure.

Description of reference numerals:
1 battery pack; 2 upper box; 3 lower box; 4 battery module; 5 secondary battery; 51 case; 52 electrode assembly; 53 cover plate.

### DETAILED DESCRIPTION

Implementations of a positive electrode active material and a method for preparing the same, a positive electrode plate, a secondary battery, a battery module, a battery pack, and an electric apparatus of the present disclosure are specifically disclosed and described in detail below appropriately with reference to detailed descriptions of the accompanying drawings. However, there are cases where unnecessary detailed descriptions are omitted. For example, there are cases where detailed descriptions of well-known items and repeated descriptions of actually identical structures are omitted, to avoid unnecessary redundancy in the following descriptions and to facilitate the understanding by those skilled in the art. Additionally, the accompanying drawings and subsequent descriptions are provided for those skilled in the art to fully understand the present disclosure, and are not intended to limit the subject matter recited in the claims.

The "ranges" disclosed in the present disclosure are defined in the form of lower and upper limits, with a given range being defined by the selection of a lower limit and an upper limit defining the boundaries of the particular range. A range defined in this manner may be inclusive or exclusive of the end values, and may be arbitrarily combined, that is, any lower limit may be combined with any upper limit to form a range. For example, if ranges of 60-120 and 80-110 are listed for a particular parameter, it is to be understood that ranges of 60-110 and 80-120 are also expected. Additionally, if the minimum range values 1 and 2 and the maximum range values 3, 4 and 5 are listed, the following ranges are all contemplated: 1-3, 1-4, 1-5, 2-3, 2-4 and 2-5. In the present disclosure, unless stated otherwise, the numerical range "a-b" represents an abbreviated representation of any combination of real numbers between a to b, where both a and b are real numbers. For example, the numerical range "0-5" means that all real numbers between 0-5 are listed herein, and "0-5" is only an abbreviated representation of combinations of these numerical values. In addition, when a certain parameter is described as being an integer of ≥2, it means to disclose that the parameter is, for example, the integer 2, 3, 4, 5, 6, 7, 8, 9, 10, 11, or 12.

Unless otherwise specifically stated, all the implementations and optional implementations of the present disclosure can be combined with each other to form new technical solutions.

Unless otherwise specifically stated, all technical features and optional technical features of the present disclosure can be combined with each other to form new technical solutions.

Unless otherwise specifically stated, all steps of the present disclosure may be performed sequentially or randomly, and preferably sequentially. For example, the method includes steps (a) and (b), meaning that the method may include steps (a) and (b) performed sequentially, or may include steps (b) and (a) performed sequentially. For example, the reference to the method may further include step (c), meaning that step (c) may be added to the method in any order. For example, the method may include steps (a), (b) and (c), include steps (a), (c) and (b), or steps (c), (a) and (b), and the like.

Unless otherwise specifically stated, "comprising" and "including" mentioned in the present disclosure indicate open inclusion or closed inclusion. For example, the "including" and "comprising" may indicate that it is possible to include or comprise other components not listed, and it is also possible to include or comprise the listed components exclusively.

Unless otherwise specifically stated, the term "or" is inclusive in the present disclosure. For example, the phrase "A or B" means "A, B, and or both A and B". More specifically, the condition "A or B" is satisfied by any one of the following conditions: A is true (or present) and B is false (or absent); A is false (or absent) and B is true (or present); or both A and B are true (or present).

Typically, the secondary battery includes a positive electrode plate, a negative electrode sheet, an electrolyte, and a separator. During the charging and discharging process of the battery, active ions (for example, lithium ions, and sodium ions) are intercalated and deintercalated repeatedly between the positive electrode plate and the negative electrode sheet. The electrolyte is provided between the positive electrode plate and the negative electrode sheet for ion conduction. The separator is provided between the positive electrode plate and the negative electrode sheet, and mainly functions to prevent a short circuit between the positive electrode and the negative electrode while allowing active ions to pass through.

During the formation stage of the secondary battery, the negative electrode active material electrochemically reacts with the electrolyte solution, to form a solid electrolyte interface (SEI) accompanied by gas generation. During this process, the electrical contact between some negative electrode active material particles and surrounding particles is poor, and the electrochemical reaction between the graphite material and the electrolyte solution is not timely in the formation process, so that a complete SEI film cannot be formed in time, resulting in delayed formation of the SEI film and delayed gas generation. The gas generated on delay can't be discharged with the formation procedure in time and is retained between the negative electrode sheet and separator, which hinders the charging process where active ions in this area are deintercalated from the positive electrode, passed through the separator, and intercalated into the negative electrode, thus causing the formation of black spot defects. This leads to the fact that a part of the negative electrode active material cannot effectively participate in the charging and discharging cycle of the secondary battery, and the content of active ions in the positive electrode of the secondary battery is greater than the maximum acceptable active ion content of the negative electrode, which causes some active ions to be plated on the surface of the negative electrode and lose electrical activity, resulting in the decrease of the battery capacity and the rapid decline of the cycle performance.

### [Secondary battery]

The present disclosure provides a secondary battery, which includes a negative electrode sheet. The negative electrode sheet includes a negative electrode current collector and a negative electrode film layer arranged on at least one surface of the negative electrode current collector. The negative electrode film layer includes a negative electrode active material. The powder conductivity σ of the negative electrode active material is greater than or equal to 80 S/cm but less than or equal to 106 S/cm determined under a test condition including a compaction density of 1.5 g/cm³. The compaction density of the negative electrode film layer ranges from 1.35 g/cm³ to 1.50 g/cm³.

The powder conductivity σ of the negative electrode material and the compaction density of the negative electrode film layer are adjusted. As a result, good electrical contact and conductive network are formed between the active material particles in the negative electrode sheet, and delayed gas generation of some negative electrode active material particles caused by delayed formation of the SEI film in the formation process is alleviated so that black spot defects caused by the failed intercalation of active ions due to the gas barrier is reduced, the problem of lithium plating in the secondary battery is relieved, the irreversible consumption of active ions is reduced, and the cycle performance and dynamic performance of the secondary battery are improved.

Herein, the powder conductivity σ is a powder conductivity σ of the negative electrode active material determined under a test condition including a compaction density of 1.5 g/cm³, and can be determined through a method known in the art. For example, it is determined through a method below.

At 25°C, using FT-8100A four-probe powder test platform, a sample is prepared following the four-probe method in GBT 30835-2014 Determination of powder conductivity. 1 g of the test sample powder is weighed, put in a cylindrical metal mold with a height of 25 mm and a diameter of 12 mm. After the lower electrode of the mold is pressed and the upper electrode is pressed to the station, the sample is pressurized, and held for 30 sec to maintain a sample thickness of 0.147±0.002. Then, the powder conductivity of the negative electrode active material at a compaction density of 1.50 g/cm³ is determined by the four-probe method.

In some implementations, the powder conductivity σ of the negative electrode active material is 83 S/cm to 104 S/cm determined under a test condition including a compaction density of 1.5 g/cm³. In some implementations, the powder conductivity σ of the negative electrode active material is 85 S/cm to 100 S/cm, 90 S/cm to 104 S/cm, 85 S/cm to 104 S/cm, or 95 S/cm to 100 S/cm determined under a test condition including a compaction density of 1.5 g/cm³. By adjusting the powder conductivity of the negative electrode active material, the electrical contact between the negative electrode active material particles is improved, the electrical conductivity of the negative electrode active material is improved, the black-spot phenomenon is alleviated, and the cycle performance of the secondary battery is improved.

In some implementations, the compaction density of the negative electrode film layer is 1.40 g/cm³ to 1.50 g/cm³. In some implementations, the compaction density of the negative electrode film layer is 1.40 g/cm³ to 1.43 g/cm³, 1.44 g/cm³ to 1.50 g/cm³, 1.41 g/cm³ to 1.50g/cm³, or 1.40 g/cm³ to 1.45 g/cm³. In some implementations, the compaction density of the negative electrode film layer is 1.41 g/cm³, 1.42 g/cm³, 1.44 g/cm³, 1.45 g/cm³, 1.46 g/cm³, 1.47 g/cm³, 1.48 g/cm³, 1.49 g/cm³, or in a range defined by any two of the above values. The compaction density of the negative electrode film layer is adjusted, so that the energy density of the secondary battery and the diffusion channel of active ions in the secondary battery are further improved, and the migration performance of active ions is thus improved. The rapid capacity decline caused by the plating of active ions on the surface of the negative electrode due to the insufficient charging and discharging capacity in a later cycle period is improved, thereby improving the cycle performance and fast charging performance of the secondary battery.

The compaction density of the negative electrode film layer can be determined by methods known in the art. For example, a negative electrode sheet with an area of S as a test sample is weighed on an electronic balance, and the weight is recorded as W1. The thickness T1 of the negative electrode sheet is measured with a micrometer. After weighing, the film layer on the electrode plate is wiped off, and the negative electrode current collector is weighed and the weight is recorded as W2. The thickness T2 of the negative electrode current collector is measured with a micrometer. The compaction density of the negative electrode film layer PD=(W1-W2)/[(T1-T2)×S].

In some implementations, the areal density of the negative electrode film layer is 7 mg/cm² to 15 mg/cm², 8 mg/cm² to 15 mg/cm², 9 mg/cm² to 15 mg/cm², or 7 mg/cm² to 13 mg/cm². In some implementations, the areal density of the negative electrode sheet is 13.0 mg/cm², 12 mg/cm², 11 mg/cm², 10 mg/cm², 9 mg/cm², 8 mg/cm², 7 mg/cm², or any value between two of them. By adjusting the areal density of the negative electrode sheet, the energy density of the secondary battery is increased, and the cycle performance of the secondary battery is improved.

In the present disclosure, the areal density of the negative electrode film layer can be determined by methods known in the art. For example, a cold-pressed negative electrode sheet is punched into a small disc with an area of S1, weighed, and the weight is recorded as M1. After weighing, the negative electrode film layer on the negative electrode sheet is wiped off, the negative electrode current collector is weighed and the weight is recorded as M0. Areal density of negative electrode film layer =(weight M1 of negative electrode sheet-weight M0 of negative electrode current collector)/S1.

In some implementations, the volume distribution particle size D_{V}1 of the negative electrode active material is 1.4 µm to 3.0 µm, and optionally 1.7 µm to 2.7 µm, 1.8 µm to 2.7 µm, or 1.71 µm to 2.58 µm. In some implementations, the volume distribution particle size D_{V}1 of the negative electrode active material is 1.4 µm, 1.5 µm, 1.6 µm, 1.7 µm, 1.8 µm, 1.9 µm, 2.0 µm, 2.1 µm, 2.2 µm, 2.3 µm, 2.4 µm, 2.5 µm, or in a range defined by any two of the above values. Because of the larger specific surface area and more surface active sites, the small-particle negative electrode active material is prone to the formation of by-products at the active sites during the cycle process, which leads to increased consumption of active ions and deteriorated cycle performance. By adjusting the volume distribution particle size D_{V}1 of the negative electrode active material, the content of the small-particle negative electrode active material is lowered, the irreversible consumption of active ions is reduced, and the cycle performance of the secondary battery is improved. Moreover, by adjusting the volume distribution particle size D_{V}1, the diffusion channel of active ions in the secondary battery is further improved, the migration performance of active ions and the rapid capacity decline caused by the plating of active ions in the later cycle period are improved.

In some implementations, the volume distribution particle size D_{V}50 of the negative electrode active material is 12 µm-18 µm, and optionally 14 µm-16.5 µm, 12 µm-14 µm, or 12.9 µm-14.5 µm. In some implementations, the volume distribution particle size Dv50 of the negative electrode active material is 12.9 µm, 13 µm, 15 µm, 16 µm, 17 µm, or in a range defined by any two of the above values. By adjusting the volume distribution particle size D_{V}50 of the negative electrode active material, the specific surface area of the negative electrode active material is improved, enough surface active sites are provided, the migration path of active ions is shortened, the intercalation and deintercalation of active ions are promoted, and the conductivity of the negative electrode active material and the dynamic performance of the secondary battery are improved.

In some implementations, the particle size distribution (D_{V}90-D_{V}10)/D_{V}50 of the negative electrode active material is 1.3 to 1.8, and optionally 1.35 to 1.70, or 1.35 to 1.60. In some implementations, the particle size distribution of the negative electrode active material is 1.4, 1.45, 1.5, 1.55, 1.65, 1.7, 1.75, or in a range defined by any two of the above values. By adjusting the particle size distribution of the negative electrode active material, the content of small particles in the negative electrode active material can be controlled, and the particle size distribution of the negative electrode active material is made more concentrated, which reduces the irreversible active ion consumption caused by a too high small particle content; improves the conductive network between the negative electrode active material particles, and improves the cycle performance and dynamic performance of the secondary battery.

In the present disclosure, the volume distribution particle sizes D_{V}10, D_{V}50, and D_{V}90 of the negative electrode active material are respectively the corresponding particle sizes when the cumulative volume distribution percentage of the material reaches 10%, 50%, and 90%, and can be determined by an instrument and method known in the art. For example, a laser particle size analyzer may be used for test with reference to GB/T 19077-2016. The test instrument may be Mastersizer 3000 laser particle size analyzer from Malvern Instruments Inc.

In some implementations, the tap density of the negative electrode active material is 1.25 g/cm³ to 1.45 g/cm³, and optionally 1.25 g/cm³ to 1.35 g/cm³, 1.29 g/cm³ to 1.41 g/cm³, or 1.25 g/cm³ to 1.41 g/cm³. In some implementations, the tap density of the negative electrode active material is 1.28 g/cm³, 1.30 g/cm³, 1.33 g/cm³, 1.40 g/cm³, 1.42 g/cm³, or in a range defined by any two of the above values. When the tap density of the negative electrode active material is in a suitable range, the negative electrode active material particles with a small particle size can be well dispersed between the negative electrode active material particles with a larger particle size, to fill the gaps between the negative electrode active material particles with a larger particle size and increase the contact sites between the negative electrode active material particles. This not only improves the conductivity of the negative electrode active material particles, but also facilitates the intercalation and deintercalation of active ions into and from the negative electrode active material, and reduces the plating of active ions and the black-spot phenomenon of the negative electrode sheet, thereby improving the cycle performance of the secondary battery.

Herein, the tap density can be determined through a method known in the art. For example, it can be determined by using a tap density tester for powders (such as Dandong Better BT-301) with reference to GB/T 5162-2006.

In some implementations, the specific surface area of the negative electrode active material is 0.8 m²/g to 1.4 m²/g, and optionally 0.9 m²/g to 1.3 m²/g, 0.95 m²/g to 1.1 m²/g, or 0.97 m²/g to 1.1 m²/g. In some implementations, the specific surface area of the negative electrode active material is 1.0 m²/g, 1.05 m²/g, 1.1 m²/g, 1.15 m²/g, 1.2 m²/g, 1.25 m²/g, 1.30 m²/g, 1.35 m²/g, or in a range defined by any two of the above values. By adjusting the specific surface area of the negative electrode active material, the stacking degree between the negative electrode active material particles are increased, the contact sites and the surface active sites of the negative electrode active material are enhanced, the conductivity of the negative electrode active material and the transmit of active ions are increased, and the cycle performance and the dynamic performance of the secondary battery are improved.

Herein, the term "specific surface area" refers to the total outer surface area of all particles in per gram of the material. The specific surface area of the graphite material can be determined by an instrument and method known in the art. For example, according to GB/T 19587-2017 Determination of the specific surface area, the specific surface area of the negative electrode active material is measured by a nitrogen adsorption/desorption method using a laser specific surface area analyzer (TriStar 3020 from Micromeritics, US). The negative electrode active material is dried in a vacuum drying oven, fed to a sample tube, and measured in the analyzer.

In some implementations, the gravimetric capacity of the negative electrode active material is 335 mAh/g to 350 mAh/g. Herein, the term "gravimetric capacity" refers to the ratio of the capacity that can be released by the graphite material to the weight of the graphite material. Generally, as the gravimetric capacity increases, the energy density of the secondary battery increases.

In some implementations, the gravimetric capacity of the negative electrode active material is 340.5 mAh/g to 347.5 mAh/g, for example, 344.7 mAh/g, 345.5 mAh/g, 344.9 mAh/g, and 345.9 mAh/g, which improves the energy density and cycle performance of the secondary battery.

The gravimetric capacity is determined through any method known in the art. For example, a graphite negative electrode active material sample is mixed with the conductive agent carbon black and polyvinylidene fluoride (PVDF) at a weight ratio of 91.6:1.8:6.6 in a proper amount of solvent NMP by fully stirring, to form a uniform negative electrode slurry. The negative electrode slurry is evenly coated on a surface of a copper foil as a negative electrode current collector, dried and cold pressed. Then, a lithium metal plate is used as the counter electrode, a polypropylene (PP) film is used as the separator, and an electrolyte solution was injected. The electrolyte solution has the following composition. Dimethyl carbonate (DMC), ethyl methyl carbonate (EMC), and ethylene carbonate (EC) are mixed at a volume ratio of 1:1:1 to obtain an organic solvent. Then, LiPF₆ is dissolved in the organic solvent, to prepare an electrolytic solution with a concentration of 1.0 mol/L. A CR2430 button battery is assembled in an argon-protected glove box. At 25°C, the button battery prepared above is discharged to 0.005V at a constant current of 0.05C and then to 0.005V at a constant current of 10 µA, and allowed to stand for 5 min. The first-cycle discharging capacity of the button battery is recorded. After that, it is charged to 2.0V at a constant current of 0.1C. The charging capacity of the button battery is recorded. The ratio of the charging capacity of the button battery to the weight of the graphite negative electrode active material sample is the gravimetric capacity of the graphite negative electrode active material.

In the present disclosure, the negative electrode active material can be prepared through a method including the following steps:
providing a raw material; treating the raw material to obtain a precursor; graphitizing the precursor to obtain a graphitized product; and demagnetizing, to obtain the negative electrode active material.

In some implementations, the raw material includes at least one of petroleum coke, needle-like coke and pitch coke.

Herein, the term "petroleum coke" refers to the coke formed by carbonization of petroleum residue or petroleum pitch at a high temperature.

Herein, the term "needle-like coke" refers to the coke of needle-like textures formed by liquid-phase carbonization of the coal tar pitch or petroleum pitch to generate an anisotropic mesophase, which is subjected to high-temperature carbonization and other processes.

Herein, the term "pitch coke" refers to a solid material produced by high-temperature carbonization of coal tar pitch.

In some implementations, the raw material includes petroleum coke.

Petroleum coke has excellent anisotropy, which is conducive to the preparation of graphite materials of low graphitization and low expansion, and contributes to the long cycle life of the battery. Moreover, petroleum coke has high compaction density and high gravimetric capacity, which improves the energy density of the battery. In addition, petroleum coke is widely available, facilitating the industrial production.

The above raw materials often include at least one of a mosaic, a domain, and a fibrous structure. Generally, according to the morphological characteristics of coke under a polarizing microscope and the size of the isochromatic area, the microstructure of the isochromatic area with a size of less than 30 µm is determined as the mosaic structure; the microstructure of the isochromatic area with a size of greater than 30 µm is determined as the domain structure, and the anisotropic strip-like isochromatic area is determined as the fibrous structure.

In some implementations of the present disclosure, based on the total volume of the raw material structure, the volume ratio of the mosaic structure and the domain structure in the raw material is greater than or equal to 60%, and optionally 65% to 80%.

In the present disclosure, the volume ratio of the mosaic structure and domain structure in the raw material can be tested by methods known in the art. For example, the raw materials are taken according to GB 1997-89, crushed to 1 mm, evenly mixed, and divided to obtain 40 g-50 g. 4 g-5 g sample of 0.07 mm-1.0 mm grade is obtained by sieving through a square-hole sieve and used for section preparation. According to the specifications of MT 116.1-86, polished sections of powdered coke and lump coke are prepared. The diameter of the polished section of powdered coke shall not be less than 22 mm, where the volume of cement shall be less than 1/3. The specimen is placed and flatten on a slide with clay, then put on a specimen stage and brought into focus. After the microscope is calibrated, the polarizer and analyzer are adjusted, to make them orthogonal. A gypsum plate (1λ) is inserted, to make the visual field show an interference color of first-order red. The step length of moving the ruler is determined to ensure that more than 400 effective measuring points are evenly distributed, where the point spacing is 0.3-0.5 mm, and the row spacing is generally 0.5-0.8 mm. From one end of the specimen, the microstructure type under the intersection of the crosshair is determined, and the effective number of test points of optical textures with mosaic and domain structures is divided by the total number of statistical test points, and used as the volume ratio of the mosaic and domain structure in raw material.

In some implementations, crushing is the process of reducing the particle size of the raw material. The raw material can be crushed by any mechanical device such as a crusher and a mechanical mill.

Grading is a process of adjusting the particle size distribution of the raw material, to obtain a precursor that meet the particle size requirement. The particle size and particle size distribution of the precursor can be adjusted by adjusting the grading frequency and air intake. In some implementations, the grading frequency is 40 Hz-50 Hz, and the damper degree is 20%-70% during the grading process.

In some implementations, the particle size D_{V}50 of the precursor is 10.0 µm to 25.0 µm.

In some implementations, the particle size D_{V}50 of the precursor is 10.0 µm, 13.0 µm, 15.0 µm, 17.0 µm, 20.0 µm, 23.0 µm, 25.0 µm, or in a numerical range defined by any two of the above values.

In some implementations, the particle size distribution (D_{V}90-D_{V}10)/D_{V}50 of the precursor is 1.05-1.75.

In some implementations, the particle size distribution (D_{V}90-D_{V}10)/D_{V}50 of the precursor is 1.05, 1.15, 1.25, 1.35, 1.45, 1.55, 1.65, 1.75, or in a numerical range defined by any two of the above values.

In some implementations, the tap density of the precursor is 0.5 g/cm³ to 2 g/cm³.

In some implementations, the tap density of the precursor is 0.5 g/cm³, 0.8 g/cm³, 1.0 g/cm³, 1.2 g/cm³, 1.5 g/cm³, 1.8 g/cm³, or in a numerical range defined by any two of the above values.

In some implementations, before graphitization, a low-temperature carbonization treatment may also be carried out. In some implementations, the low-temperature carbonization temperature is 900°C-1300°C, and the low-temperature carbonization time is 24 h-240 h.

In some implementations, the low-temperature carbonization temperature is optionally 900°C, 1000°C, 1100°C, 1200°C, 1300°C, or in a numerical range defined by any two of the above values.

In some implementations, the low-temperature carbonization time is optionally 24 h, 50 h, 75 h, 100 h, 150 h, 200 h, 240 h, or in a numerical range defined by any two of the above values.

Herein, the term "graphitization" refers to a heat treatment process of a carbon material, a process where the carbon material is transformed from a two-dimensional structure to a three-dimensional ordered structure of a carbon network through "microcrystal" growth.

In some implementations, the maximum graphitization power is 70%-90% of the rated power of the graphitization equipment.

In some implementations, the maximum graphitization power is 70%, 75%, 80%, 85%, or 90% of the rated power of the graphitization equipment, or in a numerical range defined by any two of the above values. It is to be understood that the graphitization equipment refers to any device capable of graphitization treatment, including, but not limited to, an Acheson furnace, a box furnace, a lengthwise furnace, a continuous graphitization furnace, an electric calciner, an intermediate frequency furnace, or a tube furnace and other devices. The rated power of the graphitization equipment produced by different manufacturers may be different, and can be selected according to the actual situation.

In some implementations, the graphitization equipment is a lengthwise furnace, and the rated power of the lengthwise furnace is 25000-32000 W. The graphitization time may be 10 h-30 h, and optionally 15 h-25 h.

In some implementations, the graphitization equipment is an Acheson furnace, the rated power of the Acheson furnace is 28000-30000 W. The graphitization time may be 30 h-50 h, and optionally 40 h-50 h.

The maximum graphitization power adopted in this disclosure needs to be lower than the rated power of the graphitization equipment, to realize the uniformity of the thermal field in the graphitization process.

In some implementations, the maximum graphitization power may be 20000 W-25000 W.

In some implementations, the maximum graphitization power is optionally 20000 W, 21000 W, 22000 W, 22500 W, 23000 W, 23500 W, 24000 W, 25000 W, or in a numerical range defined by any two of the above values.

By controlling the maximum graphitization power, the graphitization degree of the graphite material during heat treatment can be effectively controlled, and a uniform disordered layer can be formed on the bulk surface while the internal particle region of the graphite material is highly graphitized, which promotes the improvement of the cycle stability of the secondary battery.

In some implementations, in the graphitization treatment, the constant power is maintained at the maximum power for 10 h-50 h. In some implementations, the constant power is maintained at the maximum power for 10 h, 13 h, 16 h, 19 h, 22 h, 25 h, 28 h, 31 h, 33 h, 36 h, 39 h, 42 h, 45 h, 48 h, 50 h, or in a numerical range defined by any two of the above values.

In some implementations, the graphitization temperature is 2600°C to 3000°C.

In some implementations, the graphitization temperature is 2600°C, 2700°C, 2800°C, 2900°C, 3000°C, or in a numerical range defined by any two of the above values.

Appropriate graphitization temperature and time will not lead to the excessive rearrangement of the precursor that results in a too high specific surface area of the graphitized graphite material and deterioration of the high-temperature performance; but also effectively improve the graphitization degree of the graphite material, thereby simultaneously improving the high-temperature storage and cycle life of the secondary battery.

### [Negative-electrode plate]

In an example of the negative electrode sheet, the negative electrode current collector has two opposite surfaces in a thickness direction, and the negative electrode film layer is disposed on either or both of the two opposite surfaces of the negative electrode current collector.

In some embodiments, the negative electrode film layer includes a graphite material prepared by the method according to the first aspect of the present disclosure, whereby the secondary battery has good cycle performance and dynamic performance.

In some implementations, the negative electrode active material includes one of artificial graphite, natural graphite, soft carbon, hard carbon and mesocarbon microspheres. In some implementations, the negative electrode active material includes artificial graphite.

In some embodiments, the negative electrode film layer may further include other negative electrode active materials besides the graphite material. In some embodiments, the other negative electrode active materials include, but are not limited to, one or more of conventional natural graphite, artificial graphite, soft carbon, hard carbon, a silicon based material, a tin-based material, and lithium titanate. The silicon-based material may include one or more of elemental silicon, a silicon oxide, a silicon-carbon composite, a silicon-nitrogen composite, and a silicon alloy material. The tin-based material may include one or more of elemental tin, tin oxide, or a tin alloy material.

In some implementations, the negative electrode current collector may be a metal foil or a composite current collector. For example, a copper foil can be used as the metal foil. The composite current collector may include a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), and polyethylene (PE)).

In some implementations, the negative electrode film layer further optionally includes a binder. The binder may be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some implementations, the negative electrode sheet may further include a conductive agent. The conductive agent includes one or more of superconducting carbon, acetylene black, carbon black, ketjen black, carbon quantum dots, carbon nanotubes, graphene and carbon nanofibers.

In some implementations, the conductive agent includes carbon black. In some implementations, the conductive agent includes carbon nanotubes. In some implementations, the conductive agent includes carbon black and carbon nanotubes. The conductive agent is widely available and has excellent conductivity, which is beneficial to controlling the preparation cost of the secondary battery and improving the conductivity of the negative electrode sheet.

In some implementations, the negative electrode film layer may further optionally include other auxiliaries, for example, a thickener (e. g., sodium carboxymethyl cellulose (CMC-Na)) and the like.

In some implementations, the negative electrode sheet can be prepared by dispersing the above-mentioned components for preparing the negative electrode sheet, for example, the negative electrode active material, the conductive agent, the binder and any other components in a solvent (for example, deionized water), to form a negative electrode slurry; and applying the negative electrode slurry on a negative electrode current collector, followed by oven drying, cold pressing and other procedures, to obtain the negative electrode sheet.

### [Positive electrode plate]

The positive electrode plate includes a positive electrode current collector and a positive electrode film layer provided on at least one surface of the positive electrode current collector. The positive electrode film layer includes a positive electrode active material.

For example, the positive electrode current collector has two opposite surfaces in a thickness direction, and the positive electrode film layer is disposed on either or both of the two opposite surfaces of the positive electrode current collector.

In some implementations, the positive electrode current collector may be a metal foil or a composite current collector. For example, an aluminum foil can be used as the metal foil. The composite current collector may include a polymer material substrate and a metal layer formed on at least one surface of the polymer material substrate. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), and polyethylene (PE)).

In some implementations, the positive electrode active material may be a positive electrode active material well-known in the art for use in a battery. For example, the positive electrode active material may include at least one of the following materials: a lithium-containing phosphate of an olivine structure a lithium transition metal oxide, and their respective modified compounds. However, the present disclosure is not limited to these materials, and other conventional materials that can be used as positive electrode active materials of batteries may also be used. These positive electrode active materials may be used alone or in combination of two or more thereof. Here, examples of the lithium-transition metal oxide may include, but are not limited to, at least one of a lithium-cobalt oxide (such as LiCoO₂), a lithium-nickel oxide (such as LiNiO₂), a lithium-manganese oxide (such as LiMnO₂, and LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), or LiNi_{0.8}Co_{0.1}Mn_{0.1}O₂ (also referred to as NCM₈₁₁)), a lithium-nickel-cobalt-aluminum oxide (such as LiNi_{0.85}Co_{0.15}Al_{0.05}O₂) and their respective modified compounds. Examples of the lithium-containing phosphate of olivine-structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium iron manganese phosphate, and a composite material of lithium manganese iron phosphate and carbon.

In some implementations, the positive electrode film layer further optionally includes a binder. For example, the binder may include at least one of polyvinylidene difluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some implementations, the positive electrode film layer may further optionally includes a conductive agent. For example, the conductive agent may include at least one of superconducting carbon, acetylene black, carbon black, ketjen black, carbon quantum dots, carbon nanotubes, graphene, and carbon nanofibers.

In some implementations, the positive electrode plate can be prepared by dispersing the above-mentioned components for preparing the positive electrode plate, for example, the positive electrode active material, the conductive agent, the binder, and any other components, in a solvent (for example, N-methylpyrrolidone) to form a positive electrode slurry; and applying the positive electrode slurry on a positive electrode current collector, followed by oven drying, cold pressing and other procedures, to obtain the positive electrode plate.

### [Electrolyte]

The electrolyte is provided between the positive electrode plate and the negative electrode sheet for ion conduction. The type of the electrolyte is not particularly limited in the present disclosure, and can be selected as desired. For example, the electrolyte may be in a liquid, gel, or full solid state.

In some implementations, an electrolyte solution is used as the electrolyte. The electrolyte solution contains an electrolyte salt and a solvent.

In some implementations, the electrolyte salt may be at least one selected from lithium hexafluorophosphate lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some implementations, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone and diethyl sulfone.

In some implementations, the electrolyte solution further optionally contains an additive. For example, the additive may include a negative electrode film-forming additive, a positive electrode film-forming additive, and also additives that can improve certain battery performances, such as an additive that improves the overcharge performance of the battery, an additive that improves the high- or low-temperature performance of the battery, and the like.

### [Separator]

In some implementations, the secondary battery further includes a separator. The type of the separator is not particularly limited in the present disclosure, and any well-known separator with a porous structure having good chemical stability and mechanical stability may be used.

In some implementations, the material of the separator may be at least one selected from glass fiber, non-woven cloth, polyethylene, polypropylene and polyvinylidene fluoride. The separator may be a single-layer film or a multi-layer composite film, which is not particularly limited. When the separator is a multi-layer composite film, the material of each layer may be the same or different, which is not particularly limited.

In some implementations, the positive electrode plate, the negative electrode sheet, and the separator may be wound or stacked into an electrode assembly.

In some implementations, the secondary battery may include an outer package. The outer package can be used to encapsulate the above-mentioned electrode assembly and electrolyte

In some implementations, the outer package of the secondary battery may be a hard case, such as a hard plastic case, an aluminum case, a steel case, and the like. The outer package of the secondary battery can also be a soft pack, such as a bag-type soft pack. The material of the soft pack can be a plastic, and examples of the plastic include polypropylene, polybutylene terephthalate, and polybutylene succinate

In addition, the secondary battery, the battery module, the battery pack, and the electric apparatus of the present disclosure are described below by appropriately referring to the accompanying drawings.

In an embodiment of the present disclosure, a secondary battery is provided.

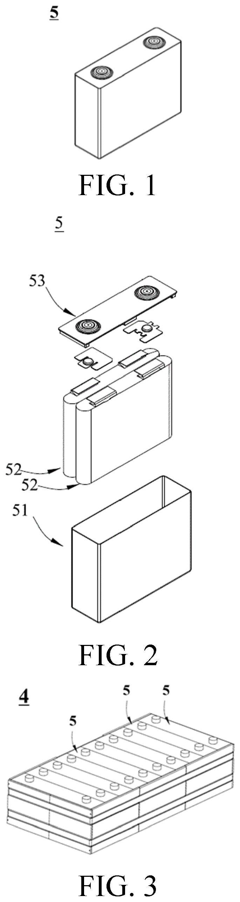

The shape of the secondary battery is not particularly limited in the present disclosure, and it may be of a cylindrical, a square or any other shape. For example, FIG. 1 shows an example of a secondary battery 5 having a square structure.

In some implementations, referring to FIG. 2, an outer package may include a case 51 and a cover plate 53. Here, the case 51 may include a bottom plate and a side plate connected to the bottom plate, where the bottom plate and the side plate defines an accommodating cavity. The case 51 has an opening that communicates with the accommodating cavity, and the cover plate 53 can cover the opening to close the accommodating cavity. The positive electrode plate, the negative electrode sheet, and the separator may be wound or stacked into an electrode assembly 52. The electrode assembly 52 is encapsulated within the accommodating cavity. The electrolyte solution impregnates the electrode assembly 52. The number of electrode assemblies 52 included in the secondary battery 5 may be one or more, which can be selected by those skilled in the art according to specific actual requirements.

In some implementations, the secondary batteries can be assembled into a battery module, the number of secondary batteries contained in the battery module can be one or more, and the specific number can be selected by those skilled in the art according to the application and capacity of the battery module.

FIG. 3 shows an example of a battery module 4. Referring to FIG. 3, in the battery module 4, multiple secondary batteries 5 may be sequentially arranged along the length direction of the battery module 4. Definitely, they can also be arranged in any other way. A plurality of secondary batteries 5 may be further fixed by fasteners.

Optionally, the battery module 4 may further include a shell having an accommodating space, in which the plurality of secondary batteries 5 are accommodated.

In some implementations, the battery module may further be assembled into a battery pack. The number of battery modules contained in the battery pack may be one or more, and the specific number can be selected by those skilled in the art according to the application and capacity of the battery pack.

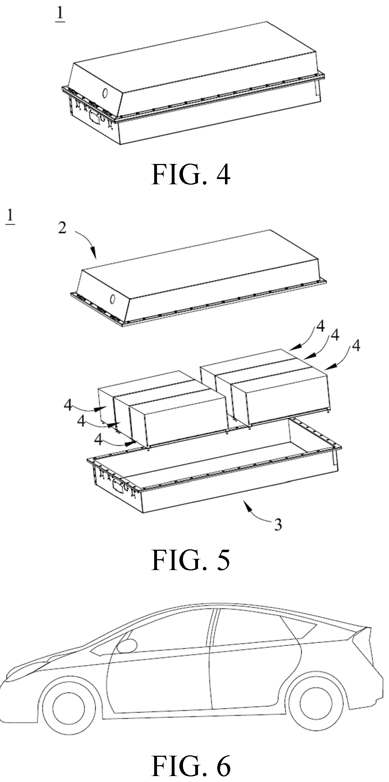

FIGs. 4 and 5 show an example of a battery pack 1. Referring to FIGs. 4 and 5, the battery pack 1 may include a battery box and a plurality of battery modules 4 provided in the battery box. The battery box includes an upper box 2 and a lower box 3, where the upper box 2 can cover the lower box 3, and defines an enclosed space for accommodating the battery module 4. The plurality of battery modules 4 may be arranged in the battery box in any manner.

In addition, the present disclosure further provides an electric apparatus. The electric apparatus includes at least one of the secondary battery, the battery module, or the battery pack provided in the present disclosure. The secondary battery, the battery module, or the battery pack can be used as a power source for the electric apparatus, and can also be used as an energy storage unit for the electric apparatus. The electric apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electric apparatus, the secondary battery, the battery module or the battery pack can be selected according to the requirements during use.

FIG. 6 shows an example of an electric apparatus. The electric apparatus is an all-electric vehicle, a hybrid electric vehicle, or a plug-in hybrid electric vehicle, etc. To meet the requirements of the electric apparatus for high power and high energy density of secondary batteries, a battery pack or a battery module may be used.

The apparatus may also be, for example, a mobile phone, a tablet computer, and a laptop, etc. The apparatus is generally required to be light and thin, and can use a secondary battery as a power source.

### Examples

Hereinafter, the embodiments of the present disclosure are described. The embodiments described below are exemplary and merely intended to explain the present disclosure, and cannot be construed as a limitation on the present disclosure. Where specific techniques or conditions are not specified in the examples, the techniques or conditions described in the literatures in the art or described in the product specifications are followed. The reagents or instruments for which no manufacturers are noted are all common products commercially available from the market.

### I. Test methods

### 1. Particle size test of powder

Determination method: According to GB/T 19077-2016 Particle Size Analysis - Laser Diffraction Methods, the particle size is determined by using, for example, Master Size 3000 laser particle size analyzer from Malvern Instruments Inc. The volume distribution particle sizes D_{V}10, D_{V}50, D_{V}90, and D_{V}1 are obtained.

### 2. Powder conductivity test

At 25°C, using FT-8100A four-probe powder test platform, a sample is prepared following the four-probe method in GBT 30835-2014 Determination of powder conductivity. 1 g of the test sample powder is weighed, put in a cylindrical metal mold with a height of 25 mm and a diameter of 12 mm. After the lower electrode of the mold is pressed and the upper electrode is pressed to the station, the sample is pressurized, and held for 30 sec to maintain a sample thickness of 0.147±0.002. Then, the powder conductivity of the carbon material at a powder compaction density of 1.50 g/cm³ is determined by the four-probe method.

### 3. Specific surface area test of powder

According to GB/T 19587-2017 Determination of the specific surface area, the specific surface area of the negative electrode active material is measured by a nitrogen adsorption/desorption method using a laser specific surface area analyzer (TriStar 3020 from Micromeritics, US). The negative electrode active material is dried in a vacuum drying oven, fed to a sample tube, and measured in the analyzer.

### 4. Tap density test of powder

According to GB/T 5162-2006 and GB/T 24533-2009, the tap density is determined by a tap density tester for powders (such as Dandong Better BT-301), where the determination parameters include a vibration frequency of 250±15 vibrations/min, an amplitude of vibration of 3±0.2 mm, a number of vibrations of 5000, and a volumetric cylinder of 25 mL.

### 5. Gravimetric capacity test of negative electrode active material

The gravimetric capacity is determined through any method known in the art. For example, a graphite negative electrode active material sample is mixed with the conductive agent carbon black and polyvinylidene fluoride (PVDF) at a weight ratio of 91.6:1.8:6.6 in a proper amount of solvent NMP by fully stirring, to form a uniform negative electrode slurry. The negative electrode slurry is evenly coated on a surface of a copper foil as a negative electrode current collector, dried and cold pressed. Then, a lithium metal plate is used as the counter electrode, a polypropylene (PP) film is used as the separator, and an electrolyte solution is injected. The electrolyte solution has the following composition. Dimethyl carbonate (DMC), ethyl methyl carbonate (EMC), and ethylene carbonate (EC) are mixed at a volume ratio of 1:1:1 to obtain an organic solvent. Then, LiPF₆ is dissolved in the organic solvent, to prepare an electrolytic solution with a concentration of 1.0 mol/L. A CR2430 button battery is assembled in an argon-protected glove box. At 25°C, the button battery prepared above is discharged to 0.005V at a constant current of 0.05C and then to 0.005V at a constant current of 10 µA, and allowed to stand for 5 min. The first-cycle discharging capacity of the button battery is recorded. After that, it is charged to 2.0V at a constant current of 0.1C. The charging capacity of the button battery is recorded. The ratio of the charging capacity of the button battery to the weight of the graphite negative electrode active material sample is the gravimetric capacity of the graphite negative electrode active material.

### 6. Compaction density test of negative electrode film layer

A negative electrode sheet with an area of S as a test sample is weighed on an electronic balance, and the weight is recorded as W1. The thickness T1 of the negative electrode sheet is measured with a micrometer. After weighing, the film layer on the electrode plate is wiped off, and the negative electrode current collector is weighed and the weight is recorded as W2. The thickness T2 of the negative electrode current collector is measured with a micrometer. The compaction density of the negative electrode film layer PD=(W1-W2)/[(T1-T2)×S].

### 7. High-temperature cycle performance test

At 60°C, the batteries of the above examples and comparative examples are charged to a voltage of 3.65V at a constant current of 1C, and then to a current of ≤ 0.05C at a constant voltage of 3.65 V. Then, the battery is discharged to a voltage of 2.5V at a constant current of 1C. This is a charging and discharging process. The discharging capacity C1 of the first cycle is recorded. The charging and discharging cycle is repeated as described above, until the battery capacity declines to 80% of the initial capacity C1. Then the test is stopped and the number of cycles is recorded.

### 8. Black spot test

At 25°C, the batteries of the above examples and comparative examples are charged to a voltage of 3.65V at a constant current of 0.33C, and disassembled in a dry chamber. Whether black spots are present on the surface of the negative electrode sheet is observed.
(1) When the total area of the black spots/the total area of the negative electrode sheet ≤1% and the area of the black spots in a single electrode plate/the area of a single electrode plate ≤8%, black spot grade 1 is defined.
(2) When 1%< the total area of the black spots/the total area of the negative electrode sheet ≤ 3%, or 8% < the area of the black spots in a single electrode plate/the area of a single electrode plate ≤ 15%, black spot grade 2 is defined;
(3) When the total area of the black spots/the total area of the negative electrode sheet>3%, or the area of the black spots in a single electrode plate/the area of a single electrode plate>15%, black spot grade 3 is defined.

### 9. Dynamic performance test

At 25°C, the secondary battery is charged to 3.65V at a constant current of 0.33C and then to a current of 0.05C at a constant voltage, and allowed to stand for 5 min. The secondary battery is discharged to 2.50V at a constant current of 0.33C. The actual capacity is recorded as C0.

Then, the secondary battery is charged sequentially at a constant current of 1.0 C0, 1.3 C0, 1.5 C0, 1.8 C0, 2.0 C0, 2.3 C0, 2.5 C0, 3.0 C0, to 3.5 V or a 0 V negative electrode cut-off potential (whichever is reached first). Each time when the charging is completed, the battery is discharged at 1 C0 to 2.5V. When the battery is charged to 10%, 20%, 30%,...... , or 80% state of charge (SOC) at various charging rates, the corresponding negative electrode potential is recorded. A charging rate-negative electrode potential curve in different SOC states is drawn. After linear fitting, the corresponding charging rates when the negative electrode potential is 0V in different SOC states are obtained. The charging rates are a charging window in the SOCs, and designated as C_{10%SOC}, C_{20%SOC}, C_{30%SOC}, C_{40%SOC}, C_{50%SOC}, C_{60%SOC}, C_{70%SOC}, and C_{80%SOC}. According to the formula (60/C_{10%SOC} +60/C_{20%SOC} + 60/C_{30%SOC} + 60/C_{40%SOC} + 60/C_{50%SOC} + 60/C_{60%SOC} + 60/C_{70%SOC} + 60/C_{80%SOC} ) x 10%, the charging time T of the secondary battery when charged from 10% SOC to 80% SOC is calculated (on the premise that no lithium plating occurs in the secondary battery), where the unit is min. The shorter the charging time is, the better the quick charging performance of the secondary battery will be.

### II. Preparation method of negative electrode active materials

### 1. Preparation of negative electrode active material H1

The petroleum coke in which the mosaic structure and domain structure account for 67% is coarsely smashed, then crushed, sieved, shaped, and graded. In the grading process, the air induction frequency of the grader is controlled to remove the fine powder (a power with a volume distribution particle size Dv50 of 3 µm-7 µm) which accounts for 25% of the total weight of the petroleum coke raw material. A precursor is obtained. The volume distribution particle size Dv50 of the precursor is 15.2 µm, and the particle size distribution (Dv90-Dv10)/Dv50 is 1.45.

The precursor is graphitized in an Acheson furnace at a graphitization temperature of 2800°C and a maximum graphitization power of 21000 W. After 48 hrs of constant-power treatment at the maximum power, the surface temperature of the graphite crucible in the Acheson furnace is cooled to 250°C, to obtain an intermediate.

The obtained intermediate is screened and demagnetized, to obtain the negative electrode active material graphite H1.

### 2. Preparation of negative electrode active material H2

The preparation process of the negative electrode active material H2 is similar to that of H1, except that the same raw materials are crushed, shaped, and graded without removal of the fine powder. The negative electrode active material H2 is obtained after the same graphitization, sieving and demagnetization procedures.

### 3. Preparation of negative electrode active material H3

The preparation process of the negative electrode active material H3 is similar to that of H1, except that fine powder accounting for 16% of the total weight of the petroleum coke raw material is removed in the grading process. The negative electrode active material H3 is obtained after the same graphitization, sieving and demagnetization procedures.

### 4. Preparation of negative electrode active material H4

The preparation process of the negative electrode active material H4 is similar to that of H1, except that fine powder accounting for 20% of the total weight of the petroleum coke raw material is removed in the grading process. The active material H4 is obtained after the same graphitization, sieving and demagnetization procedures.

### 5. Preparation of negative electrode active material H5

The preparation process of the negative electrode active material H5 is similar to that of H1, except that fine powder accounting for 35% of the total weight of the petroleum coke raw material is removed in the grading process. The active material H5 is obtained after the same graphitization, sieving and demagnetization procedures.

The negative electrode active materials H1-H5 are tested by the above methods. The test results of parameters are shown in Table 1:

**Table 1**

| Material | Dv1 (µm) | Dv50 (µm) | Particle size distribution | Powder conductivity σ (S/cm) | Gravimetric capacity (mAh/g) | Tap density (g/cm³) | Specific surface area (m²/g) |
|---|---|---|---|---|---|---|---|
| H1 | 2.58 | 13.9 | 1.51 | 104.0 | 344.7 | 1.30 | 0.95 |
| H2 | 1.13 | 12.9 | 1.79 | 73.1 | 345.5 | 1.29 | 1.10 |
| H3 | 1.69 | 13.0 | 1.67 | 85.6 | 344.9 | 1.31 | 1.03 |
| H4 | 1.71 | 13.5 | 1.66 | 95.7 | 345.9 | 1.41 | 0.97 |
| H5 | 4.27 | 14.4 | 1.44 | 108.1 | 347.6 | 1.28 | 0.85 |

### III. Preparation of secondary battery

### Example 1

### 1) Preparation of negative electrode sheet

The prepared negative electrode active material, the conductive agent carbon black Super P, the thickener sodium carboxymethyl cellulose and, the binder styrene-butadiene rubber were mixed at a weight ratio of 96:1:1.2:1.8, added to the solvent deionized water, and stirred by a vacuum mixer until the system was homogeneous, to obtain a negative electrode slurry. The negative electrode slurry was evenly coated on a negative electrode current collector that was a copper foil, dried, cold-pressed, and cut, to obtain a negative electrode sheet. The compaction density of the negative electrode sheet is 1.50 g/cm³, and the areal density is 9.50 mg/cm².

### 2) Preparation of positive electrode plate

The positive electrode active material lithium iron phosphate (LFP), the conductive agent Super P, and the binder polyvinylidene fluoride were mixed at a weight ratio of 97:1:2, added to the solvent N-methylpyrrolidone, and stirred by a vacuum mixer until the system was homogeneous, to obtain a positive electrode slurry. The positive electrode slurry was evenly coated on a positive electrode current collector that was an aluminum foil, dried, cold-pressed, and cut, to obtain a positive electrode plate. The compaction density of the positive electrode plate is 2.5 g/cm³, and the areal density is 19.5 mg/cm².

### 3) Preparation of electrolyte solution

In an argon-filled glove box with a water content of < 10 ppm, 8% lithium hexafluorophosphate (LiPF₆), 2% vinylene carbonate (VC), 30% ethylene carbonate (EC), 30% methyl ethyl carbonate (EMC), and diethyl carbonate (DEC) added up to 100% by weight percentage based on the weight of the electrolyte solution were mixed to obtain a corresponding electrolyte solution.

### 4) Separator

A polypropylene film was used as the separator.

### 5) Preparation of secondary battery

The positive electrode plate, the separator, and the negative electrode sheet were stacked in sequence such that the separator was located between the positive electrode plate and the negative electrode sheet for separation, and then a bare battery core was obtained by winding. The bare battery core was placed in an outer package, and dried, and then the electrolyte solution was injected, followed by vacuum packaging, standing, formation, shaping and other procedures, to obtain a lithium ion battery.

### Examples 2 to 6 and Comparative Examples 1 to 4

The preparation method for the secondary batteries of Examples 2 to 6 and Comparative Examples 1 to 4 was similar to that for the secondary battery of Example 1, except that the preparation parameters of the negative electrode active material and the secondary battery were adjusted. Test results of the secondary batteries prepared in Examples 1 to 6 and Comparative Examples 1 to 4 using the above methods are shown in Table 2.

**Table 2**

| No. | Negative electrode active material | Compaction density of electrode plate (g/cm³) | Number of cycles | Black spot | Charging time (min) |
|---|---|---|---|---|---|
| Example 1 | H1 | 1.43 | 2061 | Black spot grade 1 | 34.44 |
| Example 2 | H1 | 1.50 | 2344 | Without black spot | 36.14 |
| Example 3 | H3 | 1.43 | 1939 | Black spot grade 1 | 34.76 |
| Example 4 | H3 | 1.50 | 1989 | Without black spot | 36.55 |
| Example 5 | H4 | 1.43 | 1996 | Black spot grade 1 | 34.18 |
| Example 6 | H4 | 1.50 | 2205 | Without black spot | 35.98 |
| Comparative Example 1 | H1 | 1.30 | 1395 | Black spot grade 3 | 33.18 |
| Comparative Example 2 | H1 | 1.58 | 1775 | Without black spot | 38.02 |
| Comparative Example 3 | H2 | 1.43 | 1804 | Black spot grade 1 | 35.52 |
| Comparative Example 4 | H5 | 1.43 | 1534 | Black spot grade 3 | 32.05 |

From Examples 1 to 6, it can be seen that the powder conductivity σ of the negative electrode active material is greater than or equal to 80 S/cm and less than or equal to 106 S/cm. When the compaction density of the negative electrode film layer is 1.35 g/cm³-1.50g/cm³, the black-spot phenomenon is effectively alleviated, and the secondary battery has both good number of cycles and charging time.

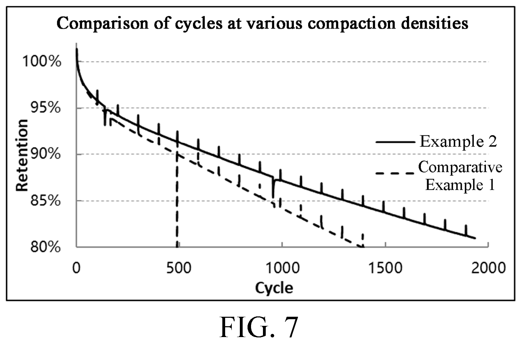

As can be seen from Examples 1-2 and Comparative Example 1, when the compaction density of the negative electrode film layer is lower than 1.35 g/cm3, the electrical contact between the negative electrode active material particles becomes poor and the energy density of the secondary battery is low, resulting in decreased number of cycles of the secondary battery and aggravated black-spot phenomenon. FIG. 7 shows a cycle curve in Example 2 and Comparative Example 1. It can be seen that the cycle performance of the secondary battery in Example 2 is significantly better than that in Comparative Example 1.

As can be seen from Examples 1-2 and Comparative Example 2, when the compaction density of the negative electrode film layer is higher than 1.50 g/cm³, the electrical contact between the active material particles of the negative electrode film layer is improved, thus alleviating the black-spot phenomenon. However, the increase of the compaction density leads to an obviously deteriorated dynamic performance, an obviously extended charging time, and a rapid decline in a later cycle period, thus reducing the cycle performance of the secondary battery.

As can be seen from Examples 1 to 6 and Comparative Example 3, the content of fine powder in the negative electrode active material in Comparative Example 3 is higher, resulting in a powder conductivity σ of less than or equal to 80 S/cm. Although the fine powder in the active material can improve the electrical contact between the active material particles, too much fine powder will block the channels, obviously prolong the charging time, and cause a rapid decline in a later cycle period, affecting the cycle performance of the secondary battery.

As can be seen from Examples 1 to 6 and Comparative Example 4, the content of fine powder in the negative electrode active material in Comparative Example 4 is lower, resulting in a powder conductivity σ of greater than 106 S/cm. The electrical contact and conductive network between the negative electrode active material particles become worse, and the irreversible consumption of active ions in the secondary battery increases, affecting the charging and discharging performance and capacity of the secondary battery, leading to a significant decrease in the number of cycles and the occurrence of serious black-spot phenomenon.

It is to be understood that the present disclosure is not limited to the above implementations. The above implementations are merely exemplary, and implementations having substantially the same technical idea and the same effects within the scope of the technical solutions of the present disclosure are all included in the technical scope of the present disclosure. In addition, other implementations constructed by applying various modifications conceivable to those skilled in the art to the implementations and combining some of the constituent elements of the implementations without departing from the scope of the essence of the present disclosure are also included in the scope of the present disclosure.

## Claims

1. A secondary battery, comprising a negative electrode sheet, the negative electrode sheet comprising a negative electrode current collector and a negative electrode film layer arranged on at least one surface of the current collector and comprising a negative electrode active material, wherein
the powder conductivity σ of the negative electrode active material is 80 S/cm to 106 S/cm determined at a compaction density of 1.5 g/cm³; and the compaction density of the negative electrode film layer is 1.35 g/cm³ to 1.50 g/cm³.

2. The secondary battery according to claim 1, wherein the powder conductivity σ is 83 S/cm to 104 S/cm.

3. The secondary battery according to claim 1 or 2, wherein the compaction density of the negative electrode film layer is 1.40 g/cm³ to 1.50 g/cm³.

4. The secondary battery according to any one of claims 1 to 3, wherein the negative electrode active material satisfies at least one of the following conditions:
(1) the volume distribution particle size D_{V}1 of the negative electrode active material is 1.4 µm to 3.0 µm, and optionally 1.7 µm to 2.7 µm;
(2) the volume distribution particle size D_{V}50 of the negative electrode active material is 12 µm to 18 µm, and optionally 12.9 µm to 14.5 µm; and
(3) the particle size distribution (D_{V}90-D_{V}10)/D_{V}50 of the negative electrode active material is 1.3 to 1.8, and optionally 1.35 to 1.70.

5. The secondary battery according to any one of claims 1 to 4, wherein the tap density of the negative electrode active material is 1.25 g/cm³ to 1.45 g/cm³, and optionally 1.29 g/cm³ to 1.41 g/cm³.

6. The secondary battery according to any one of claims 1 to 5, wherein the specific surface area of the negative electrode active material is 0.8m²/g to 1.4m²/g, and optionally 0.9m²/g to 1.3m²/g.

7. The secondary battery according to any one of claims 1 to 6, wherein the gravimetric capacity of the negative electrode active material is 335 mAh/g to 350 mAh/g, and optionally 340.5mAh/g to 347.5mAh/g.

8. The secondary battery according to any one of claims 1 to 7, wherein the areal density of the negative electrode sheet is 7 mg/cm² to 15 mg/cm².

9. The secondary battery according to any one of claims 1 to 8, wherein the negative electrode active material comprises artificial graphite.

10. An electric apparatus, comprising the secondary battery according to any one of claims 1 to 9.
